# EUROPEAN PATENT APPLICATION

(11) **EP 4 418 200 A1**
(43) Date of publication of application: **21.08.2024**
(21) Application number: 24156704.9
(22) Date of filing: 08.02.2024
(51) Int. Cl.: G06T 3/4038

(54) **VESSEL SITUATIONAL AWARENESS**

(30) Priority: 17.02.2023 GB 202302311
(71) Applicant: Wartsila Guidance Marine Ltd, Leicester, Leicestershire LE19 1QP (GB)
(72) Inventor: McKNIGHT, David, Leicester (GB)
(74) Representative: Froud, Christopher Andrew

(57) **Abstract**

There is provided a method (500) of providing a composite image of an environment around a vessel. The method (500) involves receiving (502) one or more vessel camera images from one or more cameras located on the vessel and one or more off-vessel camera images from one or more cameras located on a shore, and creating (504) an image data set comprising the one or more vessel camera images and the one or more off-vessel camera images, at least some of the images in the image data set being captured from a plurality of viewpoints. The method (500) further involves transforming (506) the viewpoint of at least some of the images of the image data set to create a set of transformed images having a common viewpoint, and stitching (508) the set of transformed images to provide the composite image.

## Description

### Field of the Invention

The invention relates to a method of providing a composite image of an environment around a vessel, a device for providing a composite image of an environment around a vessel, and a non-transitory machine-readable medium having instructions stored thereon which, when executed by a processor, cause the processor to perform the aforementioned method.

### Background of the Invention

When navigating and manoeuvring a vessel, situational awareness of the environment around the vessel is crucial, for example when coming into locks, or approaching a port. However, as the captain is typically located high up on the bridge, they tend to have limited visibility, and particularly a limited awareness of the extremities of the vessel, leading to uncertainty when manoeuvring the vessel when approaching the shoreline. This uncertainty is magnified in situations where the captain is unfamiliar with a particular lock or port.

Known situational awareness systems in the automotive industry fuse together images captured by several vehicle-mounted cameras and provide a transformed image that is projected from a different virtual viewpoint, often an aerial or "bird's eye" view to aid the driver when parking the vehicle or manoeuvring along a narrow street. In the recreational marine industry, awareness systems exist for docking that use a combination of cameras mounted around the perimeter of a boat to provide a view of the area immediately surrounding the boat and radar to detect and map objects in the vicinity of the boat.

However, the awareness systems described above are not ideal for use on large vessels owing to the need to view the environment around the vessel over a much wider area as images of objects located further from the vessel appear distorted, leading to uncertainty as to the real location of such objects. One rudimentary solution is to station a lookout along the extremity of the vessel who is instructed to report back to the captain as the vessel approaches the shoreline. However, this approach is prone to human error and does not provide the captain with real time, accurate knowledge of the location of the vessel when approaching a distant shoreline.

In view of the problems outlined above, it would be desirable to provide an improved situational awareness system for the marine sector.

### Summary of the Invention

According to a first aspect of the invention, there is provided a method of providing a composite image of an environment around a vessel. The method comprises receiving one or more vessel camera images from one or more cameras located on the vessel and one or more off-vessel camera images from one or more cameras located off the vessel and creating an image data set comprising the one or more vessel camera images and the one or more off-vessel camera images. At least some of the images in the image data set being captured from a plurality of viewpoints. The method further comprises transforming the viewpoint of at least some of the images of the image data set to create a set of transformed images having a common viewpoint and stitching the set of transformed images to provide the composite image.

By forming a composite image from both vessel camera images and off-vessel camera images, a composite image can be created that provides improved situational awareness of the environment around the vessel, since levels of distortion associated with objects having a low incident angle to the horizon (i.e., objects that are far away from the vessel) are reduced. By referring to the resulting composite image, the captain of the vessel can more confidently manoeuvre the vessel, for example when approaching the shore to dock the vessel.

Optionally, the one or more off-vessel cameras are each located at a greater distance above sea level than the one or more vessel cameras. In this way, pixel distortion and reprojection errors are reduced, thereby providing a more reliable composite image.

Optionally, upon receiving the one or more off-vessel camera images from a plurality of cameras located off the vessel, the method comprises selecting, for creating the image data set, one or more off-vessel camera images captured by one or more off-vessel cameras located within a minimum and maximum distance above sea level. There may exist a cut-off distance above sea level beyond which an off-vessel camera may be too far above a region of interest to be able to capture sufficient detail (e.g., of objects in the region of interest). By setting a minimum and maximum distance above sea level, images having reduced pixel distortion and reprojection errors may be captured that still contain sufficient detail of the area of interest.

Optionally, upon receiving the one or more off-vessel camera images from a plurality of cameras located on the shore, the method comprises selecting, for creating the image data set, one or more off-vessel camera images captured by the off-vessel camera of the plurality of cameras located at a highest distance above sea level. By selecting an off-vessel camera located a highest distance above sea level, images may be obtained having relatively lower pixel distortion and reprojection errors, thereby providing a more reliable composite image.

Optionally, the common viewpoint is an aerial view of the vessel.

Optionally, the one or more off-vessel camera images used for creating the image data set are received from an off-vessel camera of the one or more off-vessel cameras having two or more image stream outputs. In this way, off-vessel images can be obtained by "piggybacking" on an existing off-vessel camera, thereby obviating the complexity or expense of installing specific off-vessel cameras.

Optionally, one of the two or more image stream outputs is used for monitoring of a site. For example, one of the image stream outputs may be used for closed circuit television (CCTV) monitoring purposes.

Optionally, the one or more off-vessel cameras are mounted on one or more off-vessel assets. An off-vessel asset may be a shore-side asset or an off-shore asset. Examples of shore-side assets to which a camera can be mounted include lighting infrastructure, an antenna, a building, scaffolding, existing camera infrastructure, or a crane on the shore. Examples of off-shore assets to which a camera can be mounted include another vessel, an aircraft (in particular a drone), or an off-shore installation (such as an oil platform, drilling rig, or wind turbine). In this way, existing shore-side and/or off-shore infrastructure along a region of interest can be utilised for mounting of the one or more off-vessel cameras.

Optionally, the one or more off-vessel assets are movable or static off-vessel assets.

Optionally, the one or more off-vessel cameras are movably or statically mounted to the one or more off-vessel assets. In this way, the degree of freedom of the one or more cameras can be controlled as required.

Optionally, the method further comprises receiving, from each off-vessel camera, metadata indicating a location and orientation of each off-vessel camera, and transforming the viewpoint of at least some of the images of the image data set based on the metadata. In this way, image viewpoint transformation can be more precisely determined, thus reducing pixel reprojection errors.

Optionally, the method further comprises receiving vessel position and attitude data, associating the vessel position and attitude data with the one or more vessel camera images, and transforming the viewpoint of at least some of the images of the image data set based on the vessel position and attitude data. In this way, image viewpoint transformation can be more precisely determined, thus reducing pixel reprojection errors.

Optionally, the one or more cameras located on the vessel are each arranged to view a portion of the environment around the vessel.

Optionally, the one or more vessel camera images depict at least a portion of the environment around the vessel and the one or more off-vessel camera images depict at least a portion of the vessel.

Optionally, the one or more vessel camera images and the one or more off-vessel camera images depict one or more common obstacles located between the vessel and the shore.

Optionally, the method further comprises receiving, from another vessel, one or more vessel camera images from one or more vessel cameras located on the another vessel, and wherein the image data set further comprises the one or more vessel camera images from one or more vessel cameras located on the another vessel. Other vessels in the vicinity may provide alternative viewpoints which may provide a composite image having enhanced detail of the environment around the vessel.

Optionally, the method further comprises identifying an overlapping portion between images in the set of transformed images, and stitching the set of transformed images to provide the composite image by:
identifying pixels in a first image that lie in the overlapping portion;
identifying pixels in a second image that lie in the overlapping portion; and
selecting pixels from the first and second images that lie in the overlapping portion that have a quality metric exceeding a threshold to provide the composite image. In this way, only pixels having a suitably high quality metric are selected, thereby maximising the image resolution of the composite image.

Optionally, identifying the overlapping portion comprises identifying at least one of features that are common to both the one or more vessel camera images and the one or more off-vessel camera images, or image corners of the one or more vessel camera images and the one or more off-vessel camera images.

Optionally, the shore is located adjacent to an off-vessel camera.

Optionally, the method further comprises transmitting the composite image to a control system for controlling the vessel from an off-vessel location.

According to a second aspect of the invention, there is provided a device for providing a composite image of an environment around a vessel, the device comprising a processor configured to perform the method according to the first aspect.

According to a third aspect of the invention, there is provided a non-transitory computer readable medium containing instructions stored thereon which, when executed by a processor, cause the processor to perform the method according to the first aspect.

### Brief Description of the Drawings

The invention will now be described, by way of example only, with reference to the accompanying drawings, in which:
Figure 1 is a diagram illustrating a plan view of a vessel having a number of vessel cameras mounted thereon for capturing images of an environment surrounding the vessel according to the prior art;
Figure 2 is a diagram illustrating a plan view of a vessel having a number of vessel cameras mounted thereon and at least one camera located on a shore for capturing images of an environment surrounding the vessel according to the present invention;
Figure 3 is a diagram illustrating a side view of the diagram of Figure 2;
Figure 4 is a diagram illustrating an extension of the plan view of Figure 2, further illustrating a second camera located on the shore and cameras located on other vessels;
Figure 5 is a flowchart illustrating a method of generating a composite image of an environment around a vessel;
Figure 6 is a flowchart illustrating steps followed by a pixel stitching algorithm in selecting pixels for forming the composite image;
Figure 7a is an example composite image produced using only images obtained from a camera located on a vessel; and
Figure 7b is an example composite image produced using images obtained from a camera located on a vessel and from one or more cameras located along a shore.

### Detailed Description

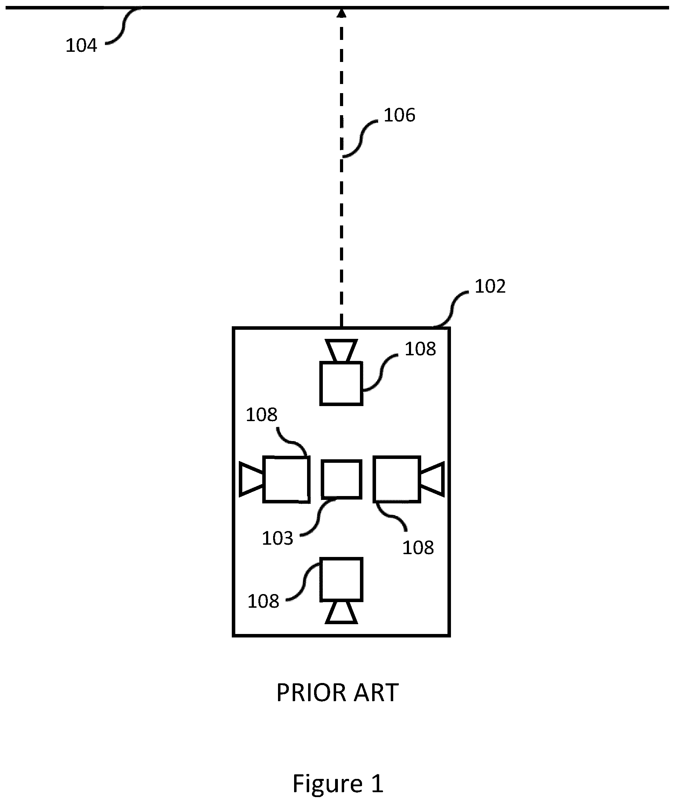

Figure 1 is a plan view illustrating a vessel 102 approaching a shore 104 along a line of travel 106 towards the shore 104. The vessel 102 has vessel cameras 108 mounted around the periphery of the vessel 102, providing a view of the environment around substantially the entire perimeter of the vessel 102. As the vessel 102 approaches the shore 104, the vessel cameras 108 capture images of the environment around the vessel 102, including any obstacles between the vessel 102 and the shore 104, and the shore 104 itself. The images captured by the vessel cameras 108 are transmitted to a processing device 103, typically on-board the vessel 102, to provide one or more images of the environment around the vessel 102.

It is known in the prior art to process the images captured by the vessel cameras 108 by remapping and stitching these images together using image processing techniques to provide a composite image of an aerial view of the environment surrounding the vessel 102. The composite image can be used by the captain of the vessel 102 to aid navigation of the vessel 102, such as when docking the vessel 102 along the shore 104. However, any features within the images captured by the one more vessel cameras 108 that are remapped with a low incident angle to the horizontal (i.e., features that are far away from the vessel 102) tend to suffer from distortion. As a result, the captain cannot know with confidence: a) whether the distance 110 between the vessel 102 and the shore 104 as inferred from the composite image of the aerial view of the vessel 102 is an accurate reflection of the actual distance between the vessel 102 and the shore 104 at a given time, and/or b) the relative location of any obstacles between the vessel 102 and the shore 104 to the vessel 102.

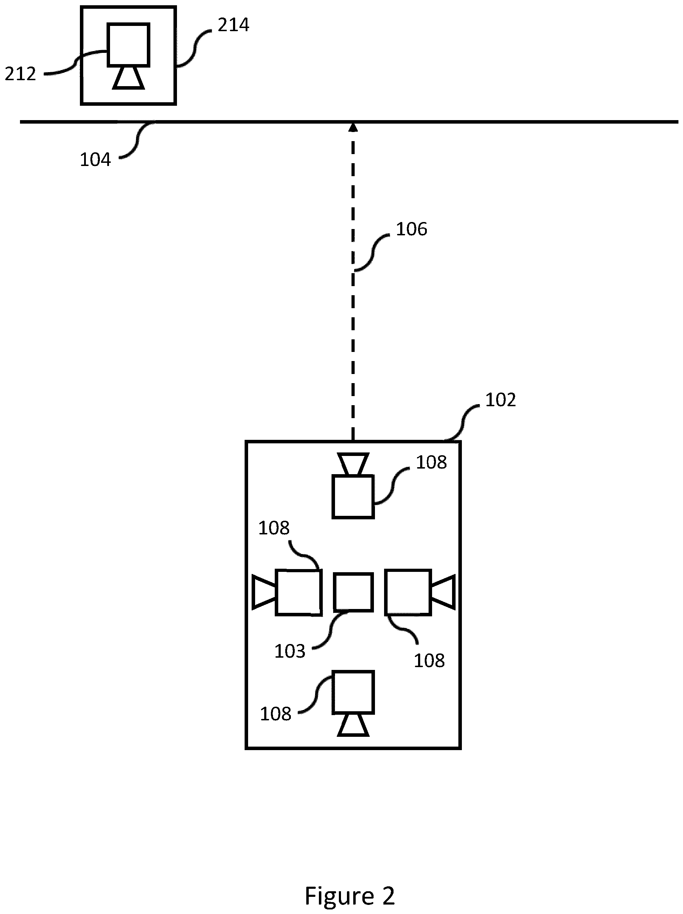

Figure 2 is a plan view that illustrates the vessel 102 approaching the shore 104 along the line of travel 106 towards the shore 104 as seen in Figure 1. However, in addition to the vessel cameras 108 mounted to the vessel 102, Figure 2 also has an additional off-vessel camera in the form of first shore-side camera 212 located on the shore 104. The first shore-side camera 212 is used to capture images looking outwards from the shore 104 towards the vessel 102. The images captured by the first shore-side camera 212 contain at least a portion of the vessel 102.

The first shore-side camera 212 is mounted to a first shore-side asset 214. The first shore-side asset 214 is a structure that is suitable for the first shore-side camera 212 to be mounted thereto. In one example, the first shore-side asset 214 is a piece of existing lighting infrastructure along the shore 104, such as a floodlight or lamppost, to which the first shore-side camera 212 can be mounted. In other examples, the first shore-side asset 214 is one of an antenna, a building, scaffolding, or a crane. Alternatively, the first shore-side camera 212 and first-shore side asset 214 can be existing camera infrastructure located on the shore (such as a closed circuit television, CCTV, camera mounted to a pole). Thus, the first shore-side asset 214 can be static or movable with respect to the shore 104.

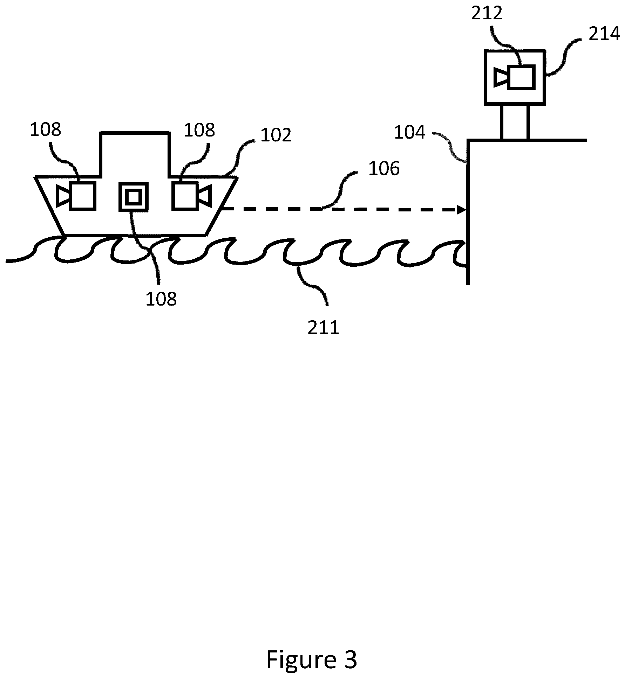

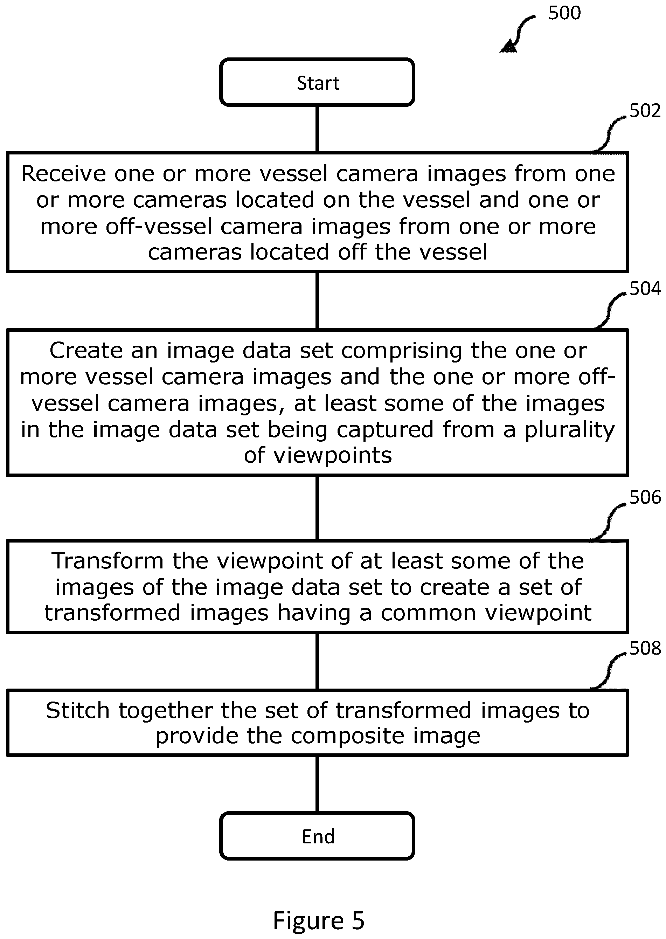

The first shore-side camera 212 is mounted to the first shore-side asset 214 such that the first shore-side camera 212 is located at a greater distance above sea level 211 than the one or more vessel cameras 108, as shown by Figure 3. By a greater distance above sea level 211, it is meant that the first shore-side camera 212 is situated at a greater angle above the horizontal than the vessel cameras 108. Images captured by the first shore-side camera 212 are processed together with images captured by the one or more vessel cameras 108 to provide a composite image of the environment surrounding the vessel 102, as discussed in more detail below with respect to Figure 5.

The first shore-side camera 212 can be mounted to the first shore-side asset 214 in a number of ways. In one example, the first shore-side camera 212 is movably mounted to the first shore-side asset 214 so that the first shore-side camera 212 is able to pan and tilt with respect to the first shore-side asset 214. In another example, the first shore-side camera 212 is statically mounted to the first shore-side asset 214 such that the first shore-side camera 212 cannot move with respect to the first shore-side asset 214. Additionally, the first shore-side asset 214 can itself be either movable (e.g., a crane) or static (e.g., a lamppost) with respect to the shore 104.

The position and attitude of the vessel 102 at a given time can be tracked in real time using a dedicated global navigation satellite system (GNSS) and motion reference unit (MRU). Data received from the GNSS and MRU is transmitted to the processing device 103 onboard the vessel 102.

Each of the first shore-side camera 212 and the vessel cameras 108 are fitted with a transmitter (not shown) that enables each of the first shore-side camera 212 and the vessel cameras 108 to wirelessly communicate with the processing device 103 onboard the vessel. Images captured by the first shore-side camera 212 and the vessel cameras 108 are transmitted to the processing device 103 onboard the vessel 102 for processing to provide the composite image. In addition, the transmitter fitted to the first shore-side camera 212 communicates metadata together with each image captured by the first shore-side camera 212. The metadata contains information about the position (e.g., coordinate location) and orientation (e.g., degree of pan and tilt) of the first shore-side camera 212.

If the first shore-side camera 212 is statically mounted to the first shore-side asset 214, and the first shore-side asset 214 is static with respect to the shore, then the position of the first shore-side camera 212 is determined by surveying the first shore-side camera 212. If knowledge of the orientation of the first shore-side camera 212 is required (e.g., when the first shore-side camera 212 is movably mounted to the first shore-side asset 214), then a MRU and/or vertical reference unit (VRU) is used to provide data of the orientation of the first shore-side camera 212. If knowledge of the position of the first shore-side camera 212 is required (e.g., if the first shore-side asset 214 to which the first shore-side camera 212 is mounted is movable with respect to the shore 104), then the position of the shore-side camera is tracked, for example, using augmented GNSS solutions with real time kinematics (RTK) corrections.

The first shore-side camera 212 may have a dual purpose. For example, the first shore-side camera 212 may be an existing shore-side camera that is used for monitoring of a site (e.g., CCTV monitoring) in the vicinity of the first shore-side camera 212 in addition to capturing images looking out from the shore 104 towards the vessel 102. As such, the first shore-side camera 212 may have at least two image stream outputs: one image stream which is used for transmitting images for monitoring of the site (e.g., to a CCTV monitoring centre); and another image stream which is used for transmitting image data to the processing device 103 onboard the vessel 102 for processing to provide the composite image.

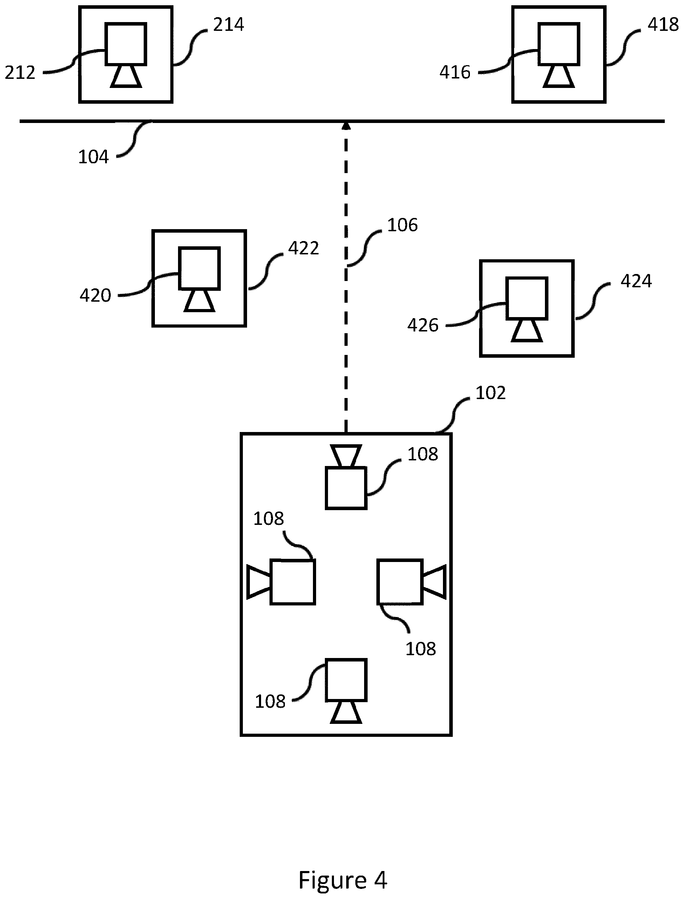

In some examples, more than one shore-side camera is present on the shore 104. For example, multiple shore-side cameras may be present on the shore 104 mounted to various shore-side assets. Figure 4 illustrates a multi-camera example where a second shore-side camera 416 is located along the shore 104 and mounted to a second shore-side asset 418. The second shore-side camera 416 is used to capture images looking outwards from the shore 104 towards the vessel 102. The images captured by the second shore-side camera 416 contain at least a portion of the vessel 102. Like the first shore-side asset 214 described above in connection with Figure 2, the second shore-side asset 418 is a structure that is suitable for the second shore-side camera 416 to be mounted thereto and can take the form of any of the examples outlined above in connection with first shore-side asset 214.

The second shore-side camera 416 is mounted to the second shore-side asset 418 such that, like the first shore-side camera 212, the second shore-side camera 416 is also located at a greater distance above sea level 211 than the one or more vessel cameras 108. Images captured by the second shore-side camera 416 are processed together with images captured by the first shore-side camera 212 and the vessel cameras 108 to provide a composite image of the environment surrounding the vessel 102, as discussed in more detail below with respect to Figure 5.

Whilst Figure 4 indicates the presence of a second shore-side camera 416, it should be appreciated that any suitable number of shore-side cameras may be present on the shore 104, and that images obtained from each of the shore-side cameras may be processed to provide the composite image of the environment surrounding the vessel 102.

Each shore-side camera may have a dual purpose as described above with respect to the first shore-side camera 212 and have at least two image stream outputs accordingly. Additionally, each shore-side camera may wirelessly communicate with the processing device 103 onboard the vessel 102 in the manner described above with respect to the first shore-side camera 212.

Figure 4 also illustrates a second vessel camera 420 located on a second vessel 422. The second vessel camera 420 is mounted to the periphery of the second vessel 422. The second vessel camera 420 is used to capture images of one of more of: the vessel 102, the shore 104, and obstacles (such as other vessels and structures) located between the vessel 102 and the shore 104. Images captured by the second vessel camera 420 thus contain at least a portion of the vessel 102, the shore 104 and/or the obstacles located between the vessel 102 and the shore 104 as appropriate to incorporate additional detail into the composite image.

Other cameras may also be present that are mounted to structures remote from the vessel 102 and the shore 104. For example, Figure 4 shows an oil rig camera 426 mounted to an oil rig 424 located out at sea. Like the second vessel camera 420, the oil rig camera 426 is used to capture images of one or more of: the vessel 102, the shore 104, and obstacles (such as other vessels and structures) located between the vessel 102 and the shore 104. Images captured by the oil rig camera 426 thus contain at least a portion of the vessel 102, the shore 104, and/or the obstacles located between the vessel 102 and the shore 104.

Position and orientation information associated with the second vessel camera 420 and oil rig camera 426 is obtained using the apparatuses discussed above with respect to the first and second shore-side cameras 212, 416, and is communicated to the processing device 103 onboard the vessel 102 via transceiver units coupled to the second vessel camera 420 and the oil rig camera 426. Images captured by the second vessel camera 420 and the oil rig camera 426 are processed together with images captured by the first shore-side camera 212, the second shore-side camera 416 and the vessel cameras 108 to provide a composite image of the environment surrounding the vessel 102, as discussed in more detail below with respect to Figure 5.

Figure 5 is a flowchart 500 illustrating a method of providing a composite image of an environment around the vessel 102. The method of Figure 5 is carried out by a processing device 103 situated on board the vessel 102. At step 502, one or more vessel camera images are received at the processing device 103 from one or more cameras 108 located on the vessel 102. Additionally, one or more off-vessel camera images are received at the processing device 103, for example, from the one or more shore-side cameras 212, 416 located on the shore 104 and from one or more cameras 422, 426 located at sea. The one or more vessel camera images and the one or more off-vessel camera images are combined as discussed in further detail below to provide the composite image of the environment around the vessel 102. Metadata associated with each of the one or more off-vessel camera images and the one or more vessel camera images is additionally received at step 502. The metadata includes information indicating the position and orientation of each of the one or more off-vessel cameras and of the one or more vessel cameras 108. Data indicating a position and attitude of the vessel 102 is also received at step 502 from navigational systems onboard the vessel.

At step 504, an image data set is created based on the one or more vessel camera images and the one or more off-vessel cameras images received at step 502. As described above with respect to Figures 3 and 4, the one or more off-vessel cameras are typically located at a greater distance above sea level 211 than the one or more cameras 108 located on the vessel 102. As a result, at least some of the images in the image data set are captured from different viewpoints (i.e., different angles from the horizontal).

If off-vessel camera images are received from more than one off-vessel camera providing substantially the same view, certain selection criteria may be applied to determine which off-vessel images to select to create the image data set. As discussed above, each of the off-vessel cameras are coupled to a transceiver module (not shown) configured to transmit metadata containing camera position and orientation data associated with the camera Based on this metadata, it can be determined which of the off-vessel cameras is located at the greatest distance above sea level 211, and only images received from the off-vessel camera at the greatest distance above sea level 211 may be chosen to be used for creating the image data set. Alternatively, the selection criteria may be set such that any off-vessel camera images received from off-vessel cameras located within a particular height range above sea level 211 are selected for creating the image data set. In this instance, if both of the first shore-side camera 212 and the second shore-side camera 416 are located within the particular height range above sea level, then images captured by both the first shore-side camera 212 and the second shore-side camera 416 are selected for creating the image data set.

As each of the vessel cameras and off-vessel cameras capture images from different viewpoints, at step 506 the viewpoint of at least some of the images of the image data set is transformed in order to create a set of transformed images having a common viewpoint. Viewpoint transformation techniques are well known to the skilled person and are not discussed in detail here for brevity. As one example, a rotation matrix is applied to each image in the set of transformed images such that each images appears to have been captured from the common viewpoint. The degree of rotation to be applied to each image captured by each of the off-vessel cameras and vessel cameras in the set of transformed images is determined based upon the received metadata (e.g., the position and orientation of each shore-side camera 212, 416, the oil rig camera 426, the vessel cameras 108 and the second vessel camera 420). As will be appreciated, the degree of rotation will differ from image to image based on the relative distance above horizontal of the camera at the time a particular image was captured. The common viewpoint is an aerial view of the vessel.

At step 508, the set of transformed images having a common viewpoint are stitched together to provide the composite image. An example process for stitching the set of transformed images using a stitching algorithm is provided below. However, the set of transformed images may be stitched in a number of ways, with which the skilled person would be familiar. In one example, an overlapping portion between images in the set of transformed images is identified, and the images in the set of transformed images are stitched together based on the overlapping portion. The overlapping portion can be identified based on common features in images of the set of transformed images and/or by image corners of the one or more vessel camera images and the one or more off-vessel camera images. The common features and the image corners can be pre-identified or automatically identified by image processing software.

The composite image is displayed to the captain on a display on board the vessel and is periodically refreshed to provide the captain with real-time awareness of the environment surrounding the vessel 102 as the captain brings the vessel 102 towards the shore to dock.

### Pixel Stitching Algorithm

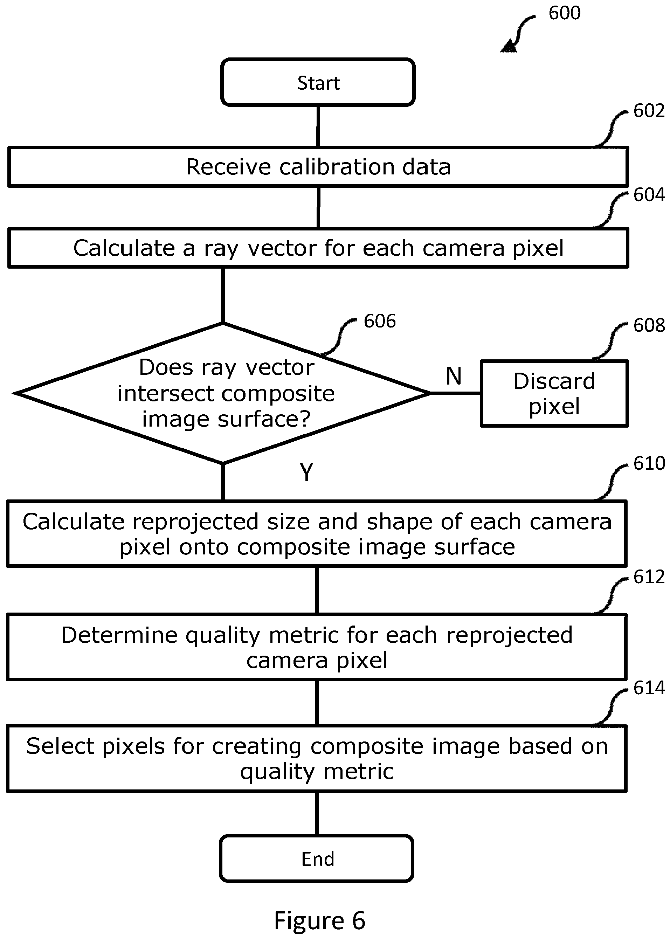

Figure 6 illustrates a process 600 followed by a stitching algorithm to produce the composite image of the environment around the vessel 102. To produce the composite image, the algorithm first requires the following calibration information (step 602):
- Intrinsic calibration data of each camera, including intrinsic calibration parameters such as the focal length, field of view (both vertical and horizontal), optical centre (sometimes referred to as principal point or skew), resolution and distortion coefficients of each camera. The intrinsic calibration parameters for each camera are calculated prior to capturing images. The intrinsic calibration parameters allow captured images to be corrected to compensate for lens distortions (such as barrel distortions) and for 3D points in a camera coordinate system (i.e., [X_{c}, Y_{c}, Z_{c}]) to be mapped onto 2D image coordinates (i.e., [x, y]).
- Extrinsic calibration data required for each camera:
   ∘ For cameras mounted on a vessel (such as cameras 108 and camera 420), the extrinsic calibration data is the six-degree-of-freedom (6DOF) pose (up/down, port/starboard, forward/aft, yaw, pitch, and roll) of the camera relative to the vessel (i.e., relative to a reference frame of the vessel). The algorithm also requires the 6DOF pose of the vessel itself relative to a global reference point at a given moment in time (i.e., relative to a vessel reference frame). The 6DOF of the vessel can be determined in real time using known techniques, such as a dedicated Global Navigation Satellite System (GNSS) receiver in combination with a Motion Reference Unit (MRU) installed on the vessel. The 6DOF pose of each camera mounted on a vessel is obtained from the metadata communicated from each camera as discussed earlier with respect to Figure 2. Using the 6DOF pose of each camera mounted on a vessel relative to the vessel, and the 6DOF pose of the vessel itself, 3D points in a world coordinate system (i.e., [X, Y, Z]) can be mapped onto 3D points in the vessel camera coordinate system (i.e., [X_{c}, Y_{c}, Z_{c}]). A corresponding extrinsic calibration is required for cameras mounted to any other asset (such as an oil rig) that is liable to move in response to the sea.
   ∘ For fixed off-vessel cameras that are in fixed locations not attached to other vessels or assets that are liable to move in response to the sea (such as shore-side cameras 212, 416 fixed to the shore 104, or off-vessel cameras on assets that are fixed to the sea bed, like a wind turbine), the 6DOF pose of these fixed off-vessel cameras is taken relative to a global reference frame (i.e., relative to some common point in space for all fixed off-vessel cameras). The 6DOF pose is obtained from the metadata communication from each of the fixed off-vessel cameras discussed earlier with respect to Figure 2. Using the 6DOF pose of each of the fixed off-vessel cameras relative to the global reference frame, 3D points in the world coordinate system (i.e., [X, Y, Z]) can be mapped onto 3D points in the coordinate system of the fixed off-vessel cameras (i.e., [X_{c}, Y_{c}, Z_{c}]).
- The 6DOF pose of the composite image surface relative to the global reference frame.

At step 604, the algorithm calculates, for each camera pixel, a ray vector. The ray vector is defined in the global reference frame and represents the direction of the pixel with which the ray vector is associated. Based on the calibration information, the algorithm can determine the propagation of the ray vector outwards from each camera pixel towards the composite image surface, and thus calculate whether the ray vector for each pixel has an intersection point with the composite image surface for each pixel (step 606). The ray vector can be calculated either from one or more corners of a camera pixel or from the centre of a camera pixel. Not all of the pixels captured by each camera will be useful for creating the composite image since not all ray vectors will intersect the composite image surface. For example, if a horizontal composite image surface is located below a camera, and the camera is oriented such that at least part of the camera image is above the horizon, any ray vectors associated with pixels forming the part of the camera image that is above the horizon will not intersect the composite image surface. Therefore, any ray vectors which will not intersect the composite image surface may be discarded (step 608).

Through knowledge of the direction of the ray vector and the point at which the ray vector intersects with the composite image surface, the algorithm can determine how each camera pixel will reproject (in terms of size and shape) onto the composite image surface. For example, by calculating a ray vector from each corner of a camera pixel, the algorithm can determine how vertices of the camera pixel will reproject onto the composite image surface and thus how skewed the camera pixel will become when reprojected onto the composite image surface. Alternatively, camera pixel reprojection onto the composite image surface can be approximated by instead calculating a single ray vector from the centre of a camera pixel together with an angle of incidence of that camera pixel with, and distance from, the composite image surface.

Where camera images are reprojected onto the composite image surface overlap, there will be a choice of multiple pixels to select from for forming each pixel in the composite image. To decide which camera pixels to select for creating an optimised composite image, the algorithm calculates a reprojected size and shape of each camera pixel on the composite image surface (step 610) and then determines a quality metric for each reprojected camera pixel (step 612). The quality metric is based on pixel density, pixel distortion and reprojection errors. Camera pixels having a higher quality metric are more likely to be selected for creating the composite image than those camera pixels having a lower quality metric. Generally speaking, selecting camera pixels that are as small and square as possible will create the highest quality composite image.

To select pixels that are as small as possible and therefore maximise pixel density, in an ideal world, pixels from cameras that are capable of providing higher resolution images will be assigned a higher quality metric compared to pixels from those cameras which are only capable of providing coarse resolution. Ideally, this would involve selecting pixels captured by a high-resolution camera that is close to a region of interest. In reality, cameras located along the shore 104 may all have similar resolution capabilities, in which case images captured by the nearest shore-side camera 212, 416 will provide the highest pixel density for the region of interest and thus a higher quality metric will be assigned to the pixels of images captured by the nearest shore-side camera 212, 416.

Reprojected camera pixels having a lower level of distortion (i.e., those pixels having the lowest change in aspect ratio and skew and thus being the most "square") are typically assigned a higher quality metric and thus are more likely to be selected for populating the composite image. In general, pixels captured by cameras that are located at relatively larger lateral distances from a region of interest will suffer from higher levels of pixel distortion when they are reprojected onto the composite image surface. In contrast, cameras that are located directly above a region of interest will yield pixels having lower levels of pixel distortion and thus a higher quality metric will be assigned to those pixels.

Once a quality metric has been assigned to each reprojected camera pixel, the algorithm selects, for each pixel of the composite image, pixels from the reprojected camera pixels that overlap each pixel of the composite image (step 614). In the case that multiple reprojected camera pixels overlap a given pixel of the composite image, the reprojected camera pixel that is selected to represent each pixel of the composite image is selected based on the quality metric. When selecting reprojected camera pixels for the composite image, the following rules apply:
- If, for a given pixel of the composite image, there are no reprojected camera pixels that overlap that given pixel, then the given pixel will be left empty. This scenario can arise when a blind spot is present, i.e., a particular region that is obscured from the view of all cameras. Alternatively, image interpolation may be used as a means to fill pixel "gaps" that would otherwise be left empty. For example, a given pixel "gap" may be filled with a pixel having a similar RGB values to its neighbouring pixels in order to approximate RGB values for that given pixel and avoid leaving the given pixel empty. As a specific example, linear interpolation may be used to determine RGB values that blend gradually from one side of the given pixel to another, based on the RGB values at the edges of neighbouring pixels.
- If, for a given pixel of the composite image, there is exactly one reprojected camera pixel that overlaps a given pixel on the composite image, then that reprojected camera pixel will be selected, and the RGB value of the given pixel on the composite image will be set to that of the one overlapping reprojected camera pixel.
- If, for a given pixel of the composite image, there are two or more reprojected camera pixels that overlap a given pixel on the composite image, then the reprojected camera pixel having the highest quality metric will be selected, and the RGB value of the given pixel on the composite image will be set to that of the selected reprojected camera pixel.

Alternatively, rather than selecting a single reprojected camera pixel, multiple overlapping reprojected pixels may be blended, such that the RGB value of the given pixel on the composite image surface will be set to the RGB value of the blended overlapping reprojected pixels.

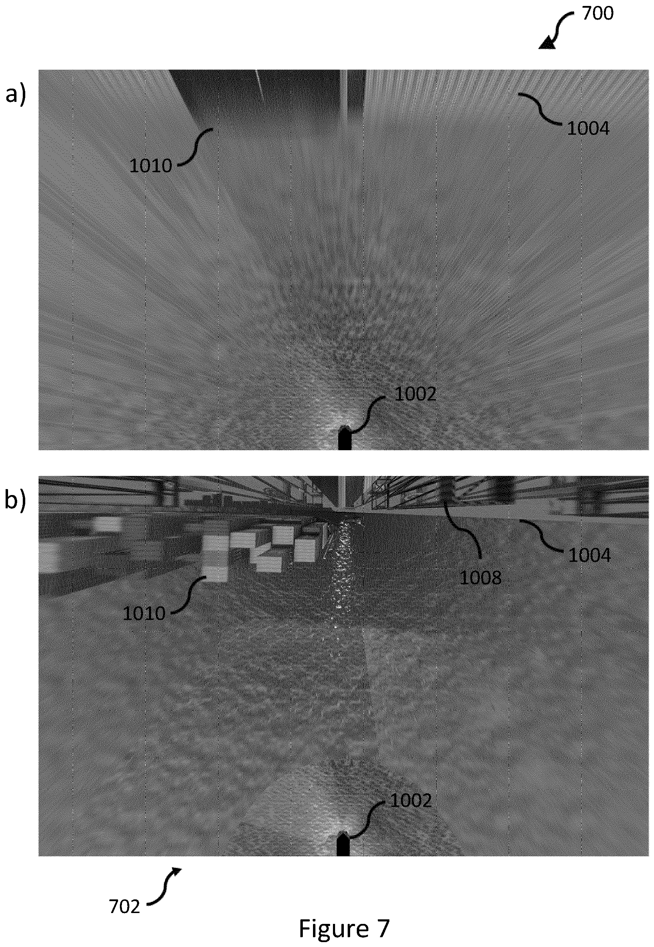

Figure 7 illustrates example composite images obtained with and without images obtained from off-vessel cameras. Figure 7a is a first example composite image 700 produced using images obtained from a camera located on the vessel 1002, but without any images obtained from any off-vessel cameras. As can be seen from Figure 7a, the resolution of composite image 700 becomes progressively blurred moving outwards from vessel 1002 towards the shore 1004, with the shore 1004 itself being poorly defined. Any objects 1010 located along the shore are heavily distorted and unclear. In contrast, Figure 7b is a second example composite image 702 produced using images obtained from a camera located on the vessel 1002 combined with images obtained from off-vessel cameras mounted to shore-side assets 1008 located along the shore 1004. Compared with the first example composite image 700 of Figure 7a, the second example composite image 702 of Figure 7b has significantly enhanced resolution, with the shore 1004 and objects 1010 along the shore being clearly defined with minimal distortion.

Although the invention has been described in terms of certain preferred embodiments, the skilled person will appreciate that various modifications could be made which still fall within the scope of the appended claims.

For example, whilst the method of Figure 5 has been disclosed as being carried out by a processing device 103 situated on board the vessel 102, the processing device 103 may alternatively be located remotely from the vessel 102, such as on the shore 104, or at any other suitable location where the processing device 103 is in communication with the vessel 102 such that the composite image is viewable onboard the vessel 102.

Whilst the invention has been described in terms of providing the composite image to a captain onboard the vessel 102 to aid the captain when docking the vessel 102 along the shore 104, the composite image may alternatively or additionally be transmitted to a control system for controlling the vessel from an off-vessel location.

## Claims

1. A method of providing a composite image of an environment around a vessel, the method comprising:
receiving one or more vessel camera images from one or more cameras located on the vessel and one or more off-vessel camera images from one or more cameras located off the vessel;
creating an image data set comprising the one or more vessel camera images and the one or more off-vessel camera images, at least some of the images in the image data set being captured from a plurality of viewpoints;
transforming the viewpoint of at least some of the images of the image data set to create a set of transformed images having a common viewpoint; and
stitching the set of transformed images to provide the composite image.

2. The method of claim 1, wherein the one or more off-vessel cameras are each located at a greater distance above sea level than the one or more vessel cameras.

3. The method of claim 1 or claim 2, wherein upon receiving the one or more off-vessel camera images from a plurality of cameras located off the vessel, selecting, for creating the image data set, one or more off-vessel camera images captured by one or more off-vessel cameras located within a minimum and maximum distance above sea level.

4. The method of claim 1 or claim 2, wherein upon receiving the one or more off-vessel camera images from a plurality of cameras located off the vessel, selecting, for creating the image data set, one or more off-vessel camera images captured by the off-vessel camera of the plurality of cameras located at a highest distance above sea level.

5. The method of any preceding claim, wherein the common viewpoint is an aerial view of the vessel.

6. The method of any preceding claim, wherein the one or more off-vessel camera images used for creating the image data set are received from an off-vessel camera of the one or more off-vessel cameras having two or more image stream outputs, optionally wherein one of the two or more image stream outputs is used for monitoring of a site.

7. The method of any preceding claim, wherein the one or more off-vessel cameras are movably or statically mounted on one or more movable or static off-vessel assets.

8. The method of claim 7, wherein each of the one or more off-vessel cameras mounted on an off-vessel asset comprise a camera mounted on a shore-side asset (for example, lighting infrastructure, an antenna, a building, scaffolding, existing camera infrastructure, or a crane on the shore) or a camera located on an off-shore asset (for example, a camera on another vessel or aircraft/drone, or a camera on an oil platform, drilling rig, wind turbine or other off-shore installation).

9. The method of any preceding claim, further comprising receiving, from each off-vessel camera, metadata indicating a location and orientation of each off-vessel camera, and transforming the viewpoint of at least some of the images of the image data set based on the metadata.

10. The method of any preceding claim, further comprising:
receiving vessel position and attitude data;
associating the vessel position and attitude data with the one or more vessel camera images; and
transforming the viewpoint of at least some of the images of the image data set based on the vessel position and attitude data.

11. The method of any preceding claim, wherein the one or more vessel camera images and the one or more off-vessel camera images depict one or more of a portion of the vessel, a portion of the environment around the vessel, and one or more common obstacles located between the vessel and the shore.

12. The method of any preceding claim, further comprising receiving, from another vessel, one or more vessel camera images from one or more vessel cameras located on the another vessel, and wherein the image data set further comprises the one or more vessel camera images from one or more vessel cameras located on the another vessel.

13. The method of any preceding claim, further comprising:
identifying an overlapping portion between images in the set of transformed images; and
stitching the set of transformed images to provide the composite image by:
identifying pixels in a first image that lie in the overlapping portion;
identifying pixels in a second image that lie in the overlapping portion; and
selecting pixels from the first and second images that lie in the overlapping portion that have a quality metric exceeding a threshold to provide the composite image, optionally wherein identifying the overlapping portion comprises identifying at least one of:
features that are common to both the one or more vessel camera images and the one or more off-vessel camera images; or
image corners of the one or more vessel camera images and the one or more off-vessel camera images.

14. A device for providing a composite image of an environment around a vessel, the device comprising a processor configured to perform the method of any of claims 1 to 13.

15. A non-transitory computer readable medium containing instructions stored thereon which, when executed by a processor, cause the processor to perform the method of any of claims 1 to 13.
